# EUROPEAN PATENT APPLICATION

(11) **EP 4 098 828 A1**
(43) Date of publication of application: **07.12.2022**
(21) Application number: 20917142.0
(22) Date of filing: 14.09.2020
(51) Int. Cl.: E05B 19/00, E05B 49/00, B60R 25/24, G06F 21/32

(54) **ACCESS CONTROL DEVICE, KEY DEVICE, AND KEY HOLDER**

(30) Priority: 30.01.2020 JP 2020013361
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: TOSHIMITSU, Kiyoshi, Kawasaki-shi, Kanagawa 212-0013 (JP); HATANAKA, Issei, Kawasaki-shi, Kanagawa 212-0013 (JP)
(74) Representative: Horn Kleimann Waitzhofer Patentanwälte PartG mbB
(86) International application number: PCT/JP2020/034698
(87) International publication number: WO 2021/152904

(57) **Abstract**

According to an embodiment, an access control device includes a first communication interface, a second communication interface and a processor. The first communication interface communicates with a key device including key identification information. The second communication interface communicates with a confirmation device that is registered in advance. The processor acquires, from the key device communicating by the first communication interface, an identifier functioning as the key identification information and a biometrics authentication result in which whether a user of the key device is an access right owner of a security device is confirmed by biological information; transmits a confirmation request signal requesting confirmation of an access permission to the confirmation device correlated with the key device by using the second communication interface, when the key identification information of the key device agrees with key identification information of a valid key and when the biometrics authentication result is an authentication failure; and permits access to the security device, upon receiving a confirmation response signal indicative of the access permission from the confirmation device in response to the confirmation request signal.

## Description

### Technical Field

Embodiments of the present invention relate to an access control device, a key device and a key holder.

### Background Art

In recent years, technologies of smart keys are widely known and are put to practical use. There is known a conventional smart key in which an emergency key is prepared to cope with run-down of a power source. However, the emergency key does not include an identification function, and there is such a problem in security that anyone can use the emergency key.

On the other hand, as a technology of identification, there is known biometrics authentication using biological information such as a fingerprint. Although the biometrics authentication has a high security, a power source is necessary for operating a device that performs biometrics authentication. Thus, it is difficult to perform identification using biometrics authentication by an emergency key that is used in a situation in which the power source of the smart key runs down.

In addition, in the biometrics authentication, the false rejection rate cannot be reduced to 0%. As an avoidance measure in the case where the false rejection has occurred, there is known a biometrics authentication device that performs authentication by using a PIN code. However, a conventional portable biometrics authentication device, which can be applied to an emergency key, is not easily equipped with a structure for authentication by a PIN code, and there is a problem that it is difficult to cope with the case where the false rejection has occurred.

### Citation List

### Patent Literature

Patent document 1: Japanese Patent No. 4539246

### Summary of Invention

### Technical Problem

In order to solve the above problem, the invention of the present application aims at providing an access control device, a key device and a key holder, which can enhance practicality while suppressing a decrease in security level.

### Solution to Problem

According to an embodiment, an access control device includes a first communication interface, a second communication interface and a processor. The first communication interface communicates with a key device including key identification information. The second communication interface communicates with a confirmation device that is registered in advance. The processor acquires, from the key device communicating by the first communication interface, an identifier functioning as the key identification information and a biometrics authentication result in which whether a user of the key device is an access right owner of a security device is confirmed by biological information; transmits a confirmation request signal requesting confirmation of an access permission to the confirmation device correlated with the key device by using the second communication interface, when the key identification information of the key device agrees with key identification information of a valid key and when the biometrics authentication result is an authentication failure; and permits access to the security device, upon receiving a confirmation response signal indicative of the access permission from the confirmation device in response to the confirmation request signal.

### Brief Description of Drawings

FIG. 1 is a view for schematically describing a configuration example of an authentication system according to each of embodiments.
FIG. 2 is a block diagram illustrating a configuration example of an access control device and a key device in an authentication system according to a first embodiment.
FIG. 3 is a view illustrating a configuration example of an access management table in the access control device according to the first embodiment.
FIG. 4 is a sequence for describing an operation example of the authentication system according to the first embodiment.
FIG. 5 is a sequence for describing an operation example of the authentication system according to the first embodiment.
FIG. 6 is a flowchart for describing an operation example of an access management device according to the first embodiment.
FIG. 7 is a block diagram illustrating a configuration example of an access control device and a key device in an authentication system according to a second embodiment.
FIG. 8 is an external appearance view illustrating a configuration example of the key device according to the second embodiment.
FIG. 9 is a view illustrating an example of a state in which the key device according to the second embodiment is accommodated in a key holder.
FIG. 10 is a view illustrating an example of the key holder accommodating the key device according to the second embodiment.
FIG. 11 is a sequence for describing an operation example of the authentication system according to the second embodiment.
FIG. 12 is a flowchart for describing an operation example of the access management device according to the second embodiment.
FIG. 13 is a block diagram illustrating a configuration example of each of devices in an authentication system according to a third embodiment.
FIG. 14 is a view illustrating a configuration example of a key device and a key holder according to the third embodiment.
FIG. 15 is a sequence for describing an operation example of the authentication system according to the third embodiment.
FIG. 16 is a block diagram illustrating a configuration example of each of devices in an authentication system according to a fourth embodiment.
FIG. 17 is a sequence for describing an operation example of the authentication system according to the fourth embodiment.
FIG. 18 is a flowchart for describing an operation example of the access management device according to the fourth embodiment.

### Description of Embodiments

Hereinafter, each of embodiments is described with reference to the accompanying drawings.

Note that the drawings are schematic ones for facilitating the understanding of the embodiments, and shapes, dimensions, ratios and the like can be designed and changed as appropriate.

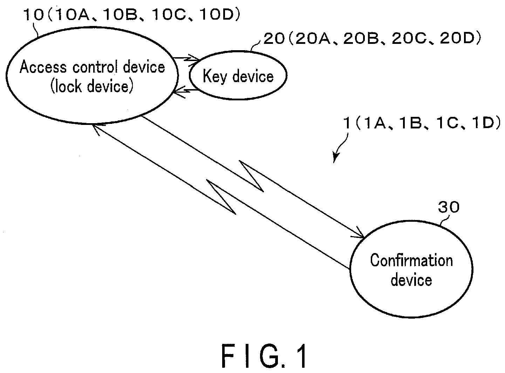

FIG. 1 is a view for schematically describing the entire configuration of an authentication system 1 (1A, 1B, 1C, 1D) according to each embodiment.

The authentication system 1 (1A, 1B, 1C, 1D) according to the embodiments is composed of an access control device 10 (10A, 10B, 10C, 10D) and a key device 20 (20A, 20B, 20C, 20D). The access control device 10 is a device that executes such access control as to enable access by the key device 20 that a lawful user operates. For example, the access control device 10 is a lock device including an electronic lock functioning as a security device. The lock device functioning as the access control device 10 is provided as a lock (lock) in a door of an automobile, a house, or the like, and is unlocked by using the key device 20.

The key device 20 delivers, to the access control device, key information and a biometrics authentication result for the access control device 10 to permit access. The key information may any information that includes an identifier (access management identifier) for identifying the key device 20. The key information is supplied from the key device 20 to the access control device 10 by communication. In addition, the key information may be acquired by the access control device 10 recognizing the shape or the like of a physical key provided in the key device 20. Furthermore, the key device 20 includes a function of performing biometrics authentication, and outputs an authentication result of a person by the biometrics authentication. Biological information used in the biometrics authentication is, for example, a fingerprint image. In this case, the key device 20 determines whether a user is a lawful user, by collating a fingerprint image of the user and a template (dictionary data for fingerprint authentication) of a registrant (lawful user, access right owner) that is registered in advance.

A confirmation device 30 is an information terminal that is set for each lawful user. The confirmation device 30 is set as a notification destination of a confirmation request for each key device 20 (or a registrant of the key device 20) in the access control device 10. Upon receiving a confirmation request from the access control device 10, the confirmation device 30 accepts an input of an access permission (unlock instruction) by the user within a predetermined period. If the access permission (unlock instruction) is input by the user, the confirmation device 30 transmits to the access control device 10 a confirmation signal that requests an access permission (unlocking).

### (First Embodiment)

Next, a description is given of configurations of a key device 20A and an access control device 10A according to a first embodiment.

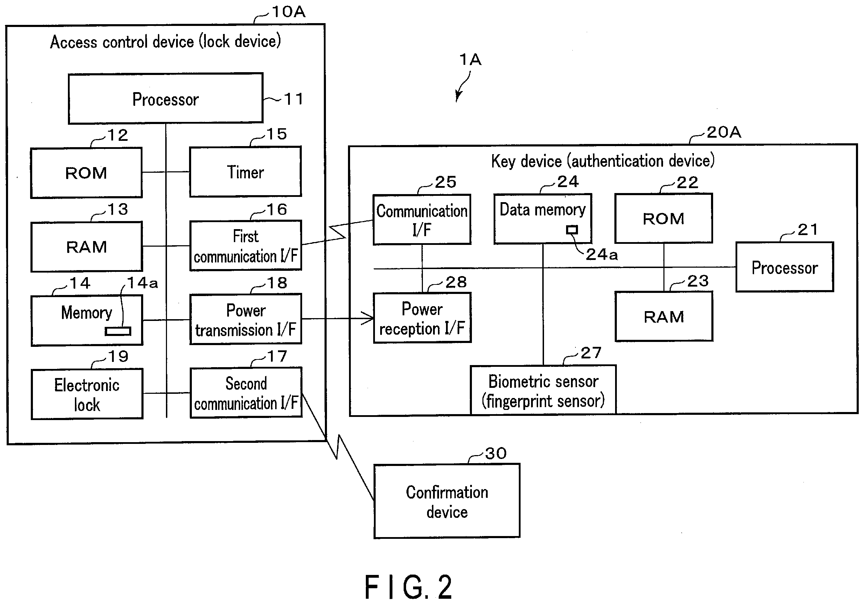

FIG. 2 is a block diagram illustrating a configuration example in the access control device 10A and key device 20A according to the first embodiment.

In the configuration example illustrated in FIG. 2, the access control device 10A includes a processor 11, a ROM 12, a RAM 13, a data memory 14, a timer 15, a first communication interface 16, a second communication interface 17, a power transmission interface 18, and an electronic lock (security device) 19.

The processor 11 executes control of each component and various processes. The processor 11 is, for example, a CPU (central processing unit). The processor 11 implements the control of each component and various processes by executing programs stored in the ROM 11 or data memory 14.

The ROM 12 is a nonvolatile memory that stores unrewritable data. The ROM 12 stores programs or control data. The RAM 13 is a volatile memory that temporarily stores data.

The data memory 14 is a rewritable nonvolatile memory. The data memory 14 is implemented by an HDD (hard disk drive data) or an SSD (solid state drive). The data memory 14 includes an access management table 14a that stores management information (setting information) such as a key (a key for permitting access) for unlocking the electronic lock 19.

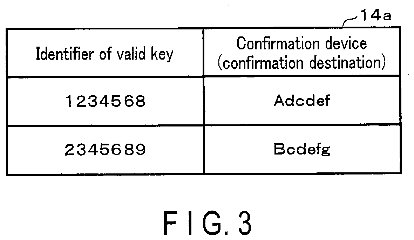

FIG. 3 is a view illustrating a configuration example of the access management table 14a.

The access management table 14a correlates and stores an identifier of the key device 20A and information indicative of a confirmation destination (a transmission destination of a confirmation request signal). The identifier stored in the access management table 14a is an identifier (access management identifier) indicative of a valid key (key device) correlated with the access control device 10A. When unlocking is enabled by a plurality of key devices, the access management table 14a may store a plurality of identifiers. The information indicative of the confirmation destination is information indicative of the confirmation device (for example, the confirmation device possessed by the registrant that registered the biological information in the key device 20A) 30 corresponding to the key device 20A. In addition, the information indicative of the confirmation destination may be information indicative of the transmission destination of the transmission of the confirmation request signal that requests confirmation of unlocking (access permission). For example, the information indicative of the confirmation destination may be information indicative of a notification destination (a mail address or the like) that is receivable by the confirmation device 30.

The timer 15 measures an elapsed time. The timer 15 is controlled by the processor 11 and measures an elapsed time from a time that is reset by the processor 11.

The first communication interface 16 is an interface for communicating with the key device 20A. The first communication interface 16 may be an interface for wireless communication, or may be an interface for transmitting and receiving a signal by a physical and electrical contact. In the case of the latter, the first communication interface 16 may include a structure that is put in contact with a contact portion provided in the key device 20A.

In addition, the first communication interface 16 may be, as the interface for wireless communication, an interface that adapts to short-range wireless communication or non-contact communication. For example, when short-range wireless communication is performed, the first communication interface 16 is composed of a short-range wireless interface that executes wireless communication adaptive to short-range wireless communication standards such as Bluetooth (trademark).

Besides, when non-contact communication is performed, the first communication interface 16 is composed of a non-contact communication interface configured to adapt to non-contact communication standards such as NFC (Near Field Communication). The non-contact communication such as NFC (Near Field Communication) executes non-contact communication while supplying electric power in a non-contact manner. Thus, when non-contact communication is executed, the first communication interface 16 and the power transmission interface 18 may be composed of the non-contact communication interface.

The second communication interface 17 is an interface for communicating with the confirmation device 30. The second communication interface 17 may be any communication interface that can transmit a confirmation request to the notification destination that is set as the transmission destination of the confirmation request. For example, the second communication interface 17 may be configured to establish a communication connection to the confirmation device 30 wirelessly or wiredly, or may be configured to transmit information to the confirmation device 30 via a cloud. For example, as the second communication interface 17, it is possible to adopt a wired or wireless interface that supports various communication standards such as Ethernet (trademark), Wi-Fi (trademark), Bluetooth, and LTE (Long Term Evolution) (trademark). In addition, the second communication interface 17 can be implemented by a combination thereof.

The power transmission interface (power supplier) 18 is a device for requesting power to the key device 20A. In addition, the power transmission interface 18 may be configured not only to supply power for enabling the key device 20A to operate, but also to supply a clock for operation, a reset control signal, and the like. The power transmission interface 18 is composed of an interface adaptive to a power reception method of power for operation in the key device 20A. For example, in the case of a device that supplies power to the key device 20A in a con-contact manner, the power transmission interface 18 is composed of an antenna that radiates an electric wave for power supply, and a circuit for radiating the electric wave from the antenna.

The electronic lock 19 is a security device that is a target of access control. The processor 11 controls the electronic lock 19 in accordance with information from the key device 20A. For example, the electronic lock 19 unlocks a lock mechanism, upon receiving an unlock signal from the processor 11. However, the electronic lock 19 is an example of the security device, and the security device is not limited to the electronic lock. The security device exemplified by the electronic lock 19 may be any security device, the access to which is controlled by the key information of the key device 20A and the biometrics authentication result relating to the user of the key device 20A.

Next, the configuration of the key device 20A according to the first embodiment is described.

In the configuration example illustrated in FIG. 2, the key device 20A includes a processor 21, a ROM 22, a RAM 23, a data memory 24, a communication interface 25, a biometric sensor (fingerprint sensor) 27, and a power reception interface 28.

The processor 21 is connected, via a data bus or the like, to the ROM 22, RAM 23, data memory 24, communication interface 25 and biometric sensor 27. In addition, the power reception interface 28 is connected in such a manner as to supply electric power to the respective components.

The processor 21 functions as a controller that controls the entirety of the key device 20A. The processor 21 is, for example, a CPU. The processor 21 may be any processor that implements control of each component and information processing by executing programs. Specifically, the processor 21 executes various processes, based on control programs and control data stored in the ROM 22 or data memory 24.

Note that some of various functions as described below, which are implemented by the processor 21 executing programs, may be implemented by hardware circuitry.

The ROM 22 is a nonvolatile memory that stores programs for control and control data in advance. The ROM 22 is assembled in the key device 20A in the state in which the ROM 22 stores control programs and control data at the stage of manufacture.

The RAM 23 is a volatile memory. The RAM 23 temporarily stores data or the like during the processing of the processor 21. For example, the RAM 23 functions as a buffer for calculation, a buffer for reception, and a buffer for transmission. As the buffer for calculation, the RAM 23 temporarily stores results or the like of various arithmetic processes executed by the processor 21. As the buffer for reception, the RAM 23 stores command data or the like received from the access control device 10A via the communication interface 25. As the buffer for transmission, the RAM 23 stores a message (response data) or the like, which is transmitted to the access control device 10A via the communication interface 25.

The data memory 24 is composed of a nonvolatile memory such as a flash ROM, which is capable of data write and rewrite. The data memory 24 stores control programs, applications and various data, which are installed in accordance with purposes of operation.

In addition, the data memory 24 includes an authentication database (DB) 24a that stores authentication data including biological information of a registrant (access right owner) used as dictionary data of biometrics (fingerprint) authentication. The authentication DB 24a stores, as authentication data of the registrant, for example, features such as feature point information generated from the biological information of the registrant. When there are a plurality of registrants, the authentication DB 24a stores authentication data of the registrants. The key device 20A may be configured to register authentication data of one specific registrant in the authentication DB 24a, or may be configured to register authentication data corresponding to registrants in the authentication DB 24a.

In addition, the data memory 24 stores an identifier (access management identifier) as key identification information that identifies the key device 20A. The identifier is supplied to the access control device 10A as the key identification information. The access control device 10A determines whether to be a valid key, the access to which is permitted by the identifier acquired from the key device 20A.

The communication interface 25 is an interface for communicating with the access control device 10A. The communication interface 25 establishes a communication connection to the first communication interface 16 of the access control device 10A, and executes data transmission and reception. The communication interface 25 is an interface of a communication method corresponding to the first communication interface 16.

For example, when the access control device 10A and the key device 20A communicate by non-contact communication such as NFC (Near Field Communication), the communication interface 25 and the first communication interface 16 are composed of interfaces for non-contact communication. In addition, when the access control device 10A and the key device 20A communicate by short-range wireless communication such as Bluetooth (trademark), the communication interface 25 and the first communication interface 16 are composed of interfaces for short-range wireless communication. Besides, the communication interface 25 and the first communication interface 16 may be interfaces that transmit and receive signals by a physical and electrical contact.

The biometric sensor 27 acquires biological information of the user of the key device 20A. The biometric sensor 27 is, for example, a fingerprint sensor. The fingerprint sensor functioning as the biometric sensor 27 acquires a fingerprint image from the user's finger. The fingerprint sensor functioning as the biometric sensor 27 includes a CCD sensor or the like. Besides, the fingerprint sensor 27 may include a sensor that detects a variation in electrical capacitance. The fingerprint sensor 27 supplies the fingerprint image to the processor 21.

The processor 21 processes the biological information detected by the biometric sensor 27, and executes biometrics authentication or the like. For example, the processor 21 processes the fingerprint image from the fingerprint sensor 27. The processor 21 extracts feature point information (information indicative of coordinates of feature points and features) from the fingerprint image from the fingerprint sensor 27.

The processor 21 executes a verification process between the fingerprint image acquired by the fingerprint sensor 27 and a registered fingerprint image. The processor 21 calculates a similarity degree between the fingerprint image acquired by the fingerprint sensor 27 and the registered fingerprint image. Here, the similarity degree is an index indicating that the similarity between the fingerprint images is higher as the similarity degree is higher. For example, the processor 21 extracts feature point information of the fingerprint image acquired by the fingerprint sensor 27. According to a predetermined algorithm, the processor 21 calculates, as the similarity degree between the fingerprint images, the similarity degree between the extracted feature point information and the feature point information of the registered fingerprint image.

In addition, as the verification process (authentication process), the processor 21 determines success or failure of biometrics authentication by comparing the calculated similarity degree and a threshold for authentication. For example, the processor 21 may obtain a result of the authentication process by recognizing an identical person (success of authentication) when the calculated similarity degree is equal to or greater than the threshold for authentication, and by not recognizing an identical person (failure of authentication) when the calculated similarity degree is less than the threshold for authentication.

The power reception interface 28 is an interface that receives electric power. The power reception interface 28 may be any interface that corresponds to the power transmission interface 18 and receives electric power transmitted from the power transmission interface 18. For example, the power reception interface 28 and the power transmission interface 18 may be configured to implement non-contact power transmission. The power reception interface 28 and the power transmission interface 18 may be configured to implement power transmission by being put in contact with each other via a contact portion. Besides, the power reception interface 28 may be composed as one piece with the communication interface 25, or may be configured to be included in the communication interface 25.

In addition, the power reception interface 28 may be configured to receive power from an external device other than the access control device 10A. For example, the power reception interface 28 may be configured to receive power that a power supply device transmits in a non-contact manner. In the case of a system configuration in which the power reception interface 28 receives power from an external device, the power transmission interface 18 may be omitted from the access control device 10A.

Note that the key device 20A may include a structure as needed, in addition to the structure as illustrated in FIG. 2, or a specific structure may be excluded from the key device 20A. For example, the key device 20A may include a display unit that displays various kinds of information. The display unit may be any display unit that displays information in accordance with control from the processor 21. A concrete example of the display unit may be a light (for example, an LED (Light Emitting Diode)) that is turned on in accordance with control from the processor 21, or may be a display that displays an image (information) instructed by the processor 21.

Next, an operation of the authentication system 1A according to the first embodiment is described.

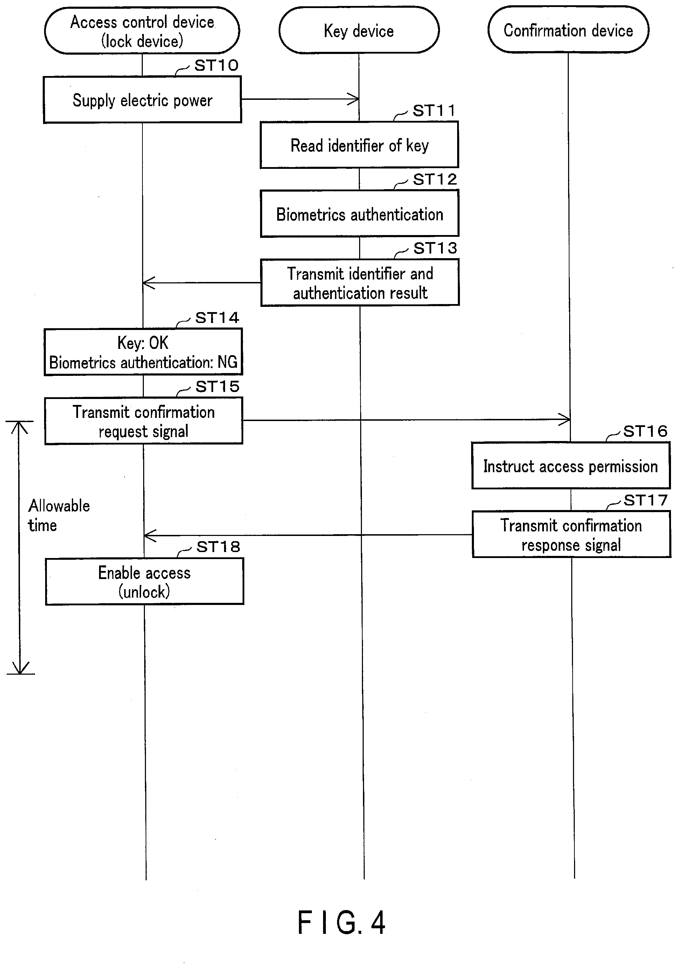

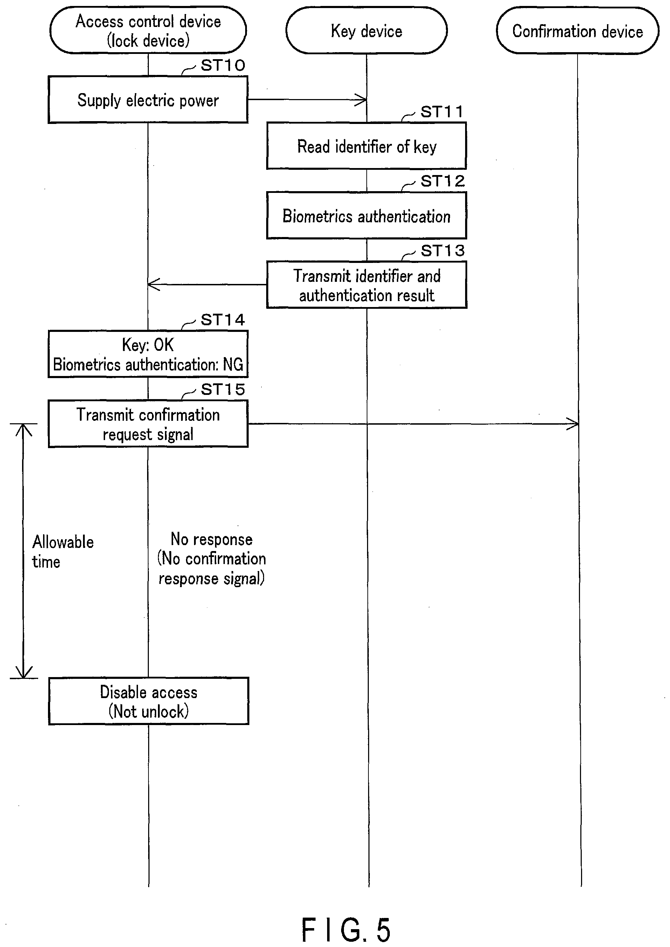

FIG. 4 and FIG. 5 are sequences for describing operation examples of the authentication system 1A in a case where biometrics authentication in the key device 20A failed. FIG. 4 is a timing chart in a case where an access permission is instructed by the confirmation device 30 in response to a confirmation request signal after the failure of the biometrics authentication, and FIG. 5 is a timing chart in a case where a confirmation response signal is absent in response to a confirmation request signal after the failure of the biometrics authentication.

As illustrated in FIG. 4, the access control device 10A supplies electric power for operation to the key device 20A (ST10). For example, the access control device 10A supplies, from the power transmission interface 18, power that can be received by the power reception interface 28 of the key device 20A.

The key device 20A is activated by the power supplied from the access control device 10A. The processor 21 of the activated key device 20A establishes a communication state with the access control device 10A by the communication interface 25. Upon the establishment of the communication state with the access control device 10A, the processor 21 reads an identifier as identification information of the key device, which is stored in the data memory 24 (ST11).

In addition, the processor 21 acquires the biological information of the user by the biometric sensor 27, and executes biometrics authentication (ST12). For example, the processor 21 executes the biometrics authentication by collating the fingerprint image of the user, which is acquired by the fingerprint sensor functioning as the biometric sensor 27, and the feature point information of the fingerprint image included in the authentication data of the registrant stored in the data memory 24. Here, it is assumed that the processor 21 could not authenticate that the user and the registrant are the identical person, and the biometrics authentication failed (the biometrics authentication is NG).

The processor 21 of the key device 20A transmits the identifier read from the data memory 24 and the biometrics authentication result (here, information indicative of the failure of the biometrics authentication) to the access control device 10A by the communication interface 25 (ST13).

The access control device 10A receives, by the first communication interface 16, the identifier and the biometrics authentication result from the key device 20A. Upon receiving the identifier of the key device 20A, the processor 11 of the access control device 10A determines whether the key device 20A is a valid key by referring to the access management table 14a. The processor 11 determines whether the key device 20A is the valid key, based on whether the received identifier of the key device 20A agrees with the identifier registered in the access management table 14a. In the example illustrated in FIG. 4, it is assumed that the processor 11 determines that the key device 20A is the valid key.

In addition, when the key device 20A is the valid key, the processor 11 confirms the biometrics authentication result in the key device 20A. Here, when the biometrics authentication is successful, that is, when the key device 20A is the valid key and the user of the key device 20A is the registrant (lawful user), the processor 11 executes control to unlock the electronic lock 19 (to permit access).

On the other hand, when the biometrics authentication failed, that is, when it is not confirmed by the biometrics authentication that the key device 20A is the valid key and the user of the key device 20A is the registrant (lawful user), the processor 11 transmits a confirmation request signal to the confirmation destination corresponding to the identifier (ST14). Specifically, the processor 11 refers to the access management table 14a, and specifies the confirmation destination corresponding to the identifier. Upon specifying the confirmation destination (the transmission destination of the confirmation request signal), the processor 11 transmits the confirmation request signal to the specified confirmation destination via the second communication interface 17.

In addition, when transmitting the confirmation request signal, the processor 11 sets a period (allowable time) within which a confirmation response signal from the confirmation device 30 to the confirmation request signal is valid, and starts time monitoring by the timer. After starting the time monitoring, the processor 11 accepts, if within the set allowable time, the confirmation response signal from the confirmation device 30. Note that the confirmation response signal from the confirmation device 30 may be accepted without providing the allowable time.

When the confirmation device 30 receives the confirmation request signal from the access control device 10A, the confirmation device 30 accepts a user's instruction to unlock the electronic lock 19 of the access control device 10A. For example, upon receiving the confirmation request signal, the confirmation device 30 displays, on a display unit (not illustrated), a confirmation screen as to whether or not to unlock the electronic lock of the access control device 10A.

In the state in which the confirmation screen is displayed on the display unit, the confirmation device 30 accepts an unlock instruction of the electronic lock, which the user inputs by using an operation unit (not illustrated) (ST16). If the unlock instruction of the electronic lock is input to the operation unit, the confirmation device 30 transmits to the access control device 10A the confirmation response signal to request unlocking of the electronic lock 19 (ST17). Besides, the confirmation device 30 may be provided with a memory and a biometrics authentication sensor, and a result of personal confirmation, which is obtained by collating the biological feature information, such as a fingerprint or a finger vein image, which is registered in the memory in advance, and the biological information acquired by the sensor, may be transmitted as a confirmation response signal to the access control device 10A.

After transmitting the confirmation request signal, the processor 11 of the access control device 10A accepts the confirmation response signal within the allowable time. If the processor 11 receives the confirmation response signal from the confirmation device 30 within the allowable time, the processor 11 executes control to unlock the electronic lock 19 as a process of permitting access (ST18). For example, the processor 11 supplies to the electronic lock 19 a control signal that unlocks the lock, and the electronic lock 19 unlocks the lock in accordance with the control signal from the processor 11.

Besides, as illustrated in FIG. 5, if the confirmation response signal is not received within the allowable time from the transmission of the confirmation request signal, the processor 11 of the access control device 10A disables the access and does not unlock the electronic lock 19. In this case, if the confirmation response signal is not received within the allowable time, the processor 11 of the access control device 10A may issue a notification or the like to the effect that the access is disabled, by an alarm or the like, or may issue the notification to the confirmation device 30. In addition, when the access is disabled, the processor 11 may clear the information such as the identifier acquired from the key device 20A.

Next, an operation of the access control device 10A according to the first embodiment is described.

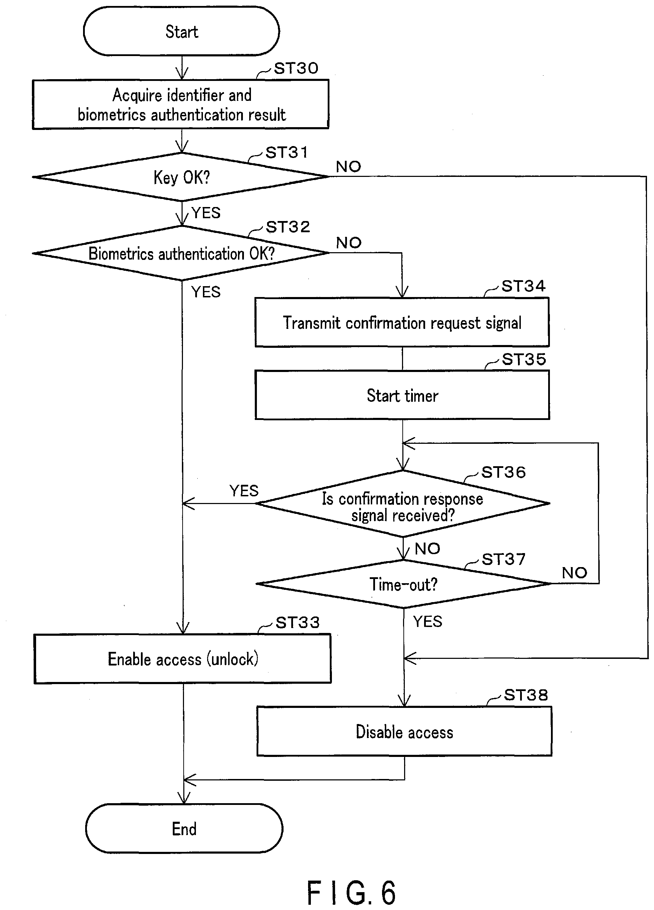

FIG. 6 is a flowchart for describing an operation example of the access control device 10A according to the first embodiment.

To start with, the processor 11 of the access control device 10A supplies electric power for operation to the key device 20A by the power transmission interface 18. The processor 11 communicates, via the first communication interface 16, with the key device 20A that is activated by the power transmitted from the power transmission interface 18. The processor 11 acquires, by the first communication interface 16, the identifier of the key device 20A and the result of the biometrics authentication in the key device 20A (ST30).

Upon receiving the identifier of the key device 20A by the first communication interface 16, the processor 11 determines whether the key device 20A is the valid key, based on whether the received identifier agrees with the identifier registered in the access management table 14a (ST31).

If the processor 11 determines that the key device 20A is not the valid key (ST31, NO), the processor 11 disables the access by the key device 20A (ST38). For example, when the access is disabled, the processor 11 rejects the unlocking of the electronic lock 19 with use of the key device 20A. In this case, the processor 11 may issue an alarm indicating that the access is disabled, or may display, by a display device, information indicating that the access is disabled.

When the processor 11 determines that the key device 20A is the valid key (ST31, YES), the processor 11 further determines whether the user of the key device 20A is authenticated as the registrant, based on the result of the biometrics authentication, which is obtained from the key device 20A (ST32). When the user is confirmed to be the registrant by the biometrics authentication, that is, when the biometrics authentication is successful (ST32, YES), the processor 11 permits the access by the key device 20A (ST33). For example, the processor 11 unlocks the electronic lock 19 by outputting a control signal that unlocks the electronic lock 19.

On the other hand, when the user is not confirmed to be the registrant by the biometrics authentication, that is, when the biometrics authentication failed (ST32, NO), the processor 11 transmits, by using the second communication interface 17, a confirmation response signal to the confirmation device 30 that is the confirmation destination correlated with the identifier in the access management table 14a (ST33). When the processor 11 transmits the confirmation response signal, the processor 11 starts time measurement by the timer 15 (ST35).

After starting the time measurement by the timer 15, the processor 11 monitors whether a confirmation response signal from the confirmation device 30 is received by the second communication interface 17 (ST36). The confirmation response signal is a signal indicating that the permission of access to the access control device 10A is instructed in the confirmation device 30. If the processor 11 receives the confirmation response signal (ST36, YES), the processor 11 permits the access (ST33) and executes control to unlock the electronic lock 19.

When the confirmation response signal cannot be received (ST36, NO), the processor 11 checks whether a predetermined allowable time has passed, based on the time measured by the timer 15 (ST37). If the timing of reception of the confirmation response signal is within the allowable time (ST37, NO), the processor 11 stands by for the reception of the confirmation response signal. If time-out of the allowable time is determined (ST37, YES), the processor 11 disables the access by the key device 20A (ST38).

As described above, the access control device according to the first embodiment executes control as to whether access is enabled or disabled, in accordance with the validity of the key (key device) by the identifier, and the personal authentication result by the biometrics authentication. When the key is valid and the biometrics authentication failed, the access control device inquires of the confirmation destination correlated with the key as to whether the access is enabled or not. The access control device permits the access if the access control device successfully receives the signal instructing the permission of the access from the confirmation destination within the predetermined allowable time.

Thereby, even when the biometrics authentication failed, the access in the access control device can be permitted by the access permission in the confirmation destination registered in advance. Specifically, there can be provided an authentication system that can execute access control by two-element authentication by access confirmation in the preset confirmation device, even when false rejection occurs in the biometrics authentication by the key device, and that can have high practicality while suppressing a decrease in security level. In addition, if the confirmation device 30 is configured to be equipped with a memory and a biometrics authentication sensor and is configured such that a result of personal confirmation obtained by collating the biological feature information, such as a fingerprint or a finger vein image, which is registered in the memory in advance, and the biological information acquired by the sensor, is transmitted as a confirmation response signal to the access control device 10A, the abuse of the confirmation device by a third party can be avoided, and it is ensured that only the lawful user can unlock the lock.

### (Second Embodiment)

Next, a second embodiment is described.

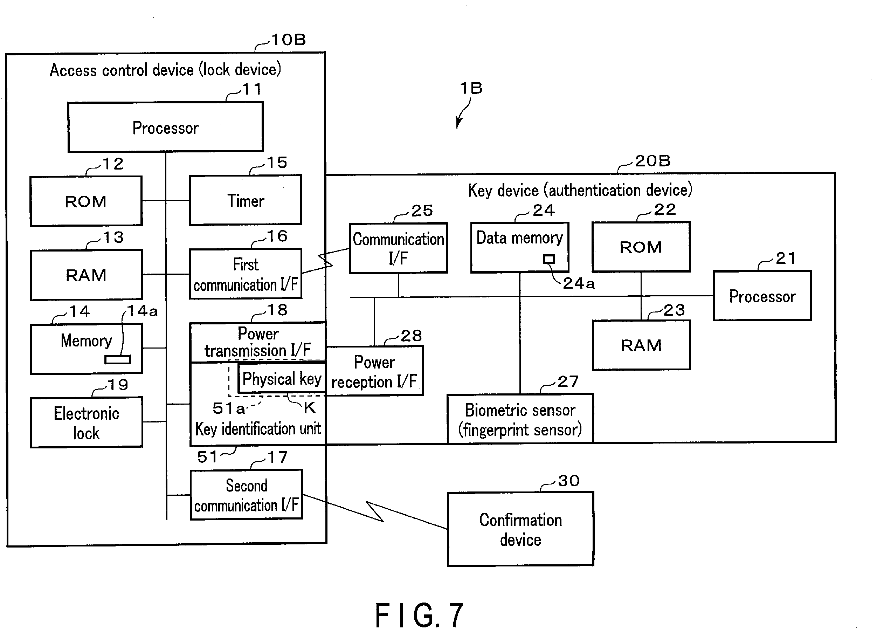

FIG. 7 is a block diagram illustrating a configuration example of an access control device 10B and a key device 20B in an authentication system 1B according to a second embodiment.

The authentication system 1B according to the second embodiment illustrated in FIG. 7 differs from the configuration of the authentication system 1A according to the first embodiment illustrated in FIG. 2 or the like, in that the key device 20B includes a physical key K and the access control device 10B includes a key identification unit 51 and an insertion unit 51a. In the configuration example illustrated in FIG. 7, structural elements similar to those illustrated in FIG. 2 are denoted by like reference signs at the same locations, and a detailed description thereof is omitted. Similarly, a detailed description of the advantageous effects derived from the configuration of the first embodiment is omitted here.

In the configuration example illustrated in FIG. 7, the access control device 10B includes a processor 11, a ROM 12, a RAM 13, a data memory 14, a timer 15, a first communication interface 16, a second communication interface 17, a power transmission interface 18, an electronic lock (security device) 19, and a key identification unit (key identifier) 51.

The key identification unit 51 identifies the physical key K that is set. For example, the key identification unit 51 includes an insertion unit 51a into which the physical key is inserted, and determines whether the shape of the physical key inserted (set) in the insertion unit 51a is a predetermined shape (the shape of the valid key). When the physical key inserted in the insertion unit 51a is the valid key, the key identification unit 51 supplies to the processor 11 a signal indicating that the physical key is the valid key. Note that the key identification unit 51 may be configured to determine whether the physical key inserted (set) in the insertion unit 51a is the valid key, by optically scanning the physical key.

In addition, the insertion unit 51a of the key identification unit 51 may be configured to be included in the power transmission interface 18. The power transmission interface 18 may be configured to supply electric power to the key device 20B including the physical key K inserted in the insertion unit 51a, and may be configured as one piece with the key identification unit 51. For example, the power transmission interface 18 may be provided with a contact portion that comes in physical contact with the physical key inserted in the insertion unit 51a, and electric power may be supplied from the contact portion to the key device 20B via the physical key.

Besides, in the configuration example illustrated in FIG. 7, the key device 20B includes a processor 21, a ROM 22, a RAM 23, a data memory 24, a communication interface 25, a biometric sensor (fingerprint sensor) 27, a power reception interface 28, and a physical key K. The processor 21, ROM 22, RAM 23, data memory 24, communication interface 25, biometric sensor (fingerprint sensor) 27 and power reception interface 28 can be implemented by the elements having the same functions as in FIG. 2.

The physical key K is set in the insertion unit 51a of the key identification unit 51 in the access control device 10B. The physical key K may be any physical key that enables the key identification unit 51 to identify whether the physical key is the valid key. For example, the physical key K has a shape that can be identified by the key identification unit 51, and, based on the shape, it is determined whether the physical key K is the valid key. In addition, in the example illustrated in FIG. 7, the physical key K is electrically connected to the power reception interface 28.

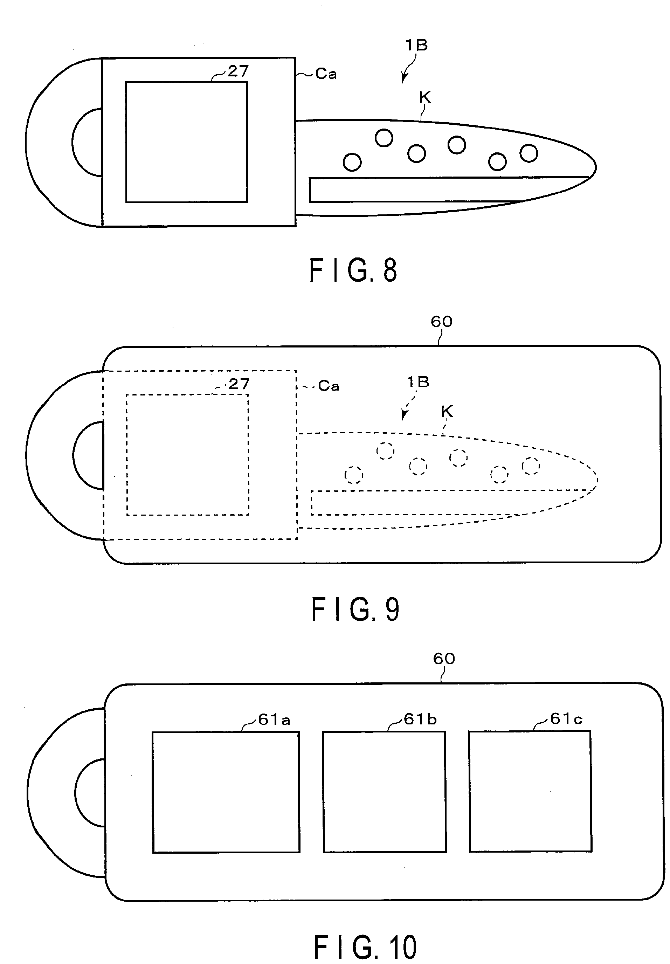

FIG. 8 is a view illustrating a configuration example of the key device 20B according to the second embodiment.

In the configuration example illustrated in FIG. 8, the key device 20B is configured such that the physical key K is attached to a main body Ca. The main body Ca includes the processor 21, ROM 22, RAM 23, data memory 24, communication interface 25, biometric sensor (fingerprint sensor) 27 and power reception interface 28. The fingerprint sensor 27 functioning as the biometric sensor is provided on the surface of the main body Ca, and the main body Ca incorporates the processor 21, ROM 22, RAM 23, data memory 24, communication interface 25, and power reception interface 28.

The physical key K includes unique identification information as a key. For example, the physical key K is formed to have a unique shape as a key. The shape of the physical key K is recognized by the key identification unit 51 as key identification information that identifies the key. In this case, the physical key K is formed of a material such as a metal, which does not change the shape as the identification information. The physical key K is attached to the main body Ca such that a part thereof, which is provided with the shape as the identification information, can be inserted into the insertion unit 51a in the access control device 10B.

Note that the physical key K may be formed of an electrically conductive material such as a metal, such that electric power may be supplied from the power transmission interface 18 in the state in which the physical key K is inserted in the insertion unit 51a. In this case, the physical key K may be configured to transmit power from the power transmission interface 18 to the power reception interface 28. Thereby, the access control device 10B is configured to be capable of transmitting power from the power transmission interface 18 to the power reception interface of the key device 20B through the physical key K set in the insertion unit 51a.

FIG. 9 and FIG. 10 are views illustrating a configuration example of the key device 20B according to the second embodiment.

In the configuration example illustrated in FIG. 9 and FIG. 10, the key device 20B is configured to be accommodated in a key holder 60 functioning as a smart key main body. The key device 20B has such a shape as to be detachably attached to the key holder 60. In the configuration example illustrated in FIG. 9, the key device 20B is used in the state in which the key device 20B is taken out of the key holder 60.

For example, the key holder 60 is used as a smart key in the state in which the key device 20B is inserted in the key holder 60. As illustrated in FIG. 10, the key holder 60 functioning as the smart key is a portable electronic device that includes an operation key 61 (61a, 61b, 61c) on a surface of the housing, and operates the electronic lock 19 of the access control device 10B by the operation of the operation key 61. In this case, the key holder 60 includes a battery such as a primary battery or a secondary battery, and operates by power from the battery. In an operable state by the power from the battery, the key holder 60 functioning as the smart key communicates with the access control device 10B by wireless communication, and unlock the electronic lock 19 by an input to the operation key 61.

If the power that can be supplied from the battery serving as a power source decreases, the key holder 60 can no longer operate as the smart key (battery run-down). In addition, also due to a problem such as a fault, the key holder 60 cannot operate as the smart key. The key device 20B accommodated in the key holder 60 functions as an emergency key for the key holder 60 functioning as the battery-driven smart key. In the state in which the key device 20B is taken out of the key holder 60, the physical key K is set in the insertion unit 51a of the key identification unit 51 of the access control device 10B, and is used as a key for unlocking the electronic lock 19.

Next, an operation of the authentication system 1B according to the second embodiment is described.

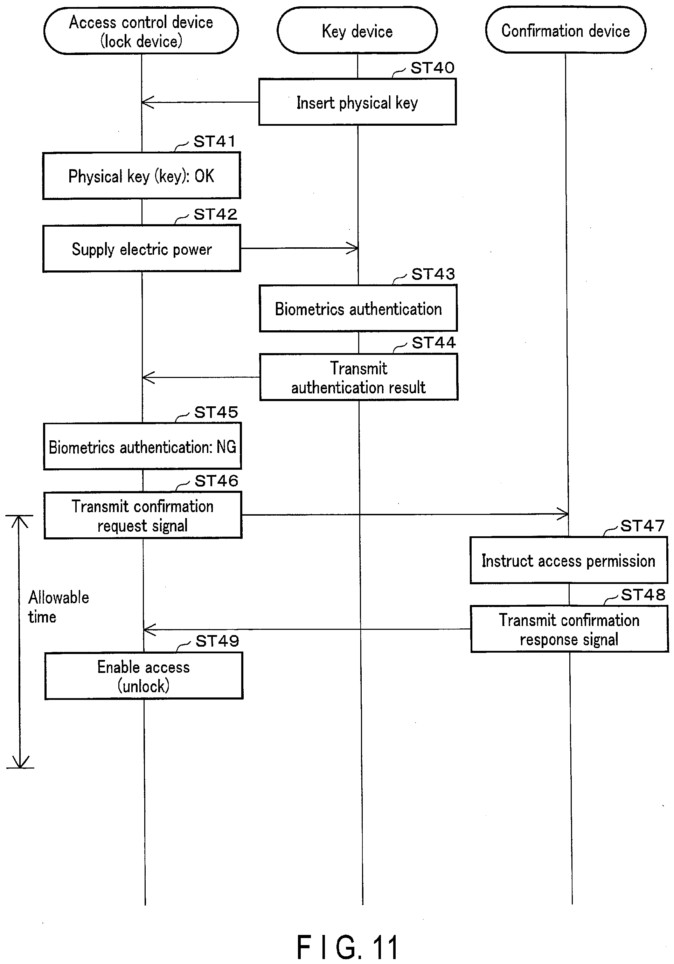

FIG. 11 is a sequence for describing an operation example of the authentication system 1B in a case where biometrics authentication in the key device 20B according to the second embodiment failed. FIG. 11 illustrates an operation example in a case where an access permission is instructed by the confirmation device in response to a confirmation request signal after the failure of biometrics authentication. Note that, in the operation example illustrated in FIG. 11, since the operation after the transmission of the confirmation request signal is the same as the operation example illustrated in FIG. 4, a detailed description thereof is omitted.

As illustrated in FIG. 11, when the electronic lock of the access control device 10B is unlocked by using the key device 20B, the user inserts the physical key K of the key device 20B into the insertion unit 51a of the key identification unit 51 in the access control device 10B (ST40).

The key identification unit 51 of the access control device 10B determines whether the key inserted in the insertion unit 51a is the valid key, by identifying the physical key K that is set in the insertion unit 51a. When the key identification unit 51 determines that the valid key is inserted, the key identification unit 51 supplies to the processor 11 a signal indicating that the valid key is inserted in the insertion unit 51a (ST41).

Upon receiving the signal indicating that the valid key is inserted in the insertion unit 51a, the processor 11 supplies electric power to the key device 20B by the power transmission interface 18 (ST42). The power transmission interface 18 outputs power that can be received by the power reception interface 28 of the key device 20B, through the physical key K inserted in the insertion unit 51a. In addition, the power transmission interface 18 may be configured to supply power to the power reception interface 28 in a non-contact manner, and, in this case, the power transmission interface 18 transmits power that can be received by the power reception interface 28, in a non-contact manner.

The key device 20B receives, by the power reception interface 28, the power from the access control device 10B in which the physical key K is inserted in the insertion unit 51a. If the power reception interface 28 receives the power, the processor 21 of the key device 20B activates the respective components and executes biometrics authentication (ST43). For example, the processor 21 activates the biometric sensor 27, and executes the biometrics authentication by collating the biological information of the user, which the biometric sensor 27 acquires, and the feature point information of the biological information included in the authentication data of the registrant (the feature of the biological information of the registrant).

Here, as a result of biometrics authentication, it is assumed that the processor 21 could not authenticate that the user and the registrant are the identical person, and the biometrics authentication failed (the biometrics authentication is NG). In this case, the processor 21 of the key device 20B transmits, as the authentication result, the information indicative of the failure of the biometrics authentication to the access control device 10B by the communication interface 25 (ST44).

The access control device 10B receives the biometrics authentication result from the key device 20B by the first communication interface 16. Upon receiving the biometrics authentication result from the key device 20B, the processor 11 determines whether it is confirmed that the user is the registrant, based on the received biometrics authentication result. Here, when it is successfully confirmed by the biometrics authentication that the user of the key device 20B is the registrant (lawful user), that is, when the biometrics authentication is successful, the processor 11 executes control to unlock the electronic lock 19 (to permit access).

On the other hand, when it could not be confirmed by the biometrics authentication that the user of the key device 20B is the registrant (lawful user), that is, when the biometrics authentication failed, the processor 11 transmits a confirmation request signal to the confirmation destination that is set by being correlated with the key device 20B including the physical key inserted in the insertion unit 51a (ST46). Specifically, the processor 11 refers to the access management table 14a, and specifies the confirmation destination that is set to correspond to the key, which the key identification unit 51 determines to be valid. Upon specifying the confirmation destination (the transmission destination of the confirmation request signal), the processor 11 transmits the confirmation request signal to the specified confirmation destination via the second communication interface 17.

In addition, when transmitting the confirmation request signal, the processor 11 sets a period (allowable time) within which a confirmation response signal from the confirmation device 30 to the confirmation request signal is valid, and starts time monitoring by the timer 15. After starting the time monitoring, the processor 11 accepts, if within the set allowable time, the confirmation response signal from the confirmation device 30.

When the confirmation device 30 receives the confirmation request signal from the access control device 10B, the confirmation device 30 accepts a user's instruction to unlock the electronic lock 19 of the access control device 10B. For example, upon receiving the confirmation request signal, the confirmation device 30 displays, on a display unit (not illustrated), a confirmation screen as to whether or not to unlock the electronic lock of the access control device 10B. In the state in which the confirmation screen is displayed on the display unit, the confirmation device 30 accepts an unlock instruction of the electronic lock, which the user inputs by using an operation unit (not illustrated) (ST47). If the unlock instruction (instruction of access permission) of the electronic lock is input by the user, the confirmation device 30 transmits to the access control device 10B the confirmation response signal to request unlocking of the electronic lock 19 (ST48).

After transmitting the confirmation request signal, the processor 11 of the access control device 10B accepts the confirmation response signal within the allowable time. If the processor 11 receives the confirmation response signal from the confirmation device 30 within the allowable time, the processor 11 executes control to unlock the electronic lock 19 as a process of permitting access (ST49). For example, the processor 11 supplies to the electronic lock 19 a control signal that unlocks the lock, and the electronic lock 19 unlocks the lock in accordance with the control signal from the processor 11.

Similarly as illustrated in FIG. 5, if the confirmation response signal is not received within the allowable time from the transmission of the confirmation request signal, the processor 11 of the access control device 10B disables the access and does not unlock the electronic lock 19.

Next, an operation of the access control device 10B according to the second embodiment is described.

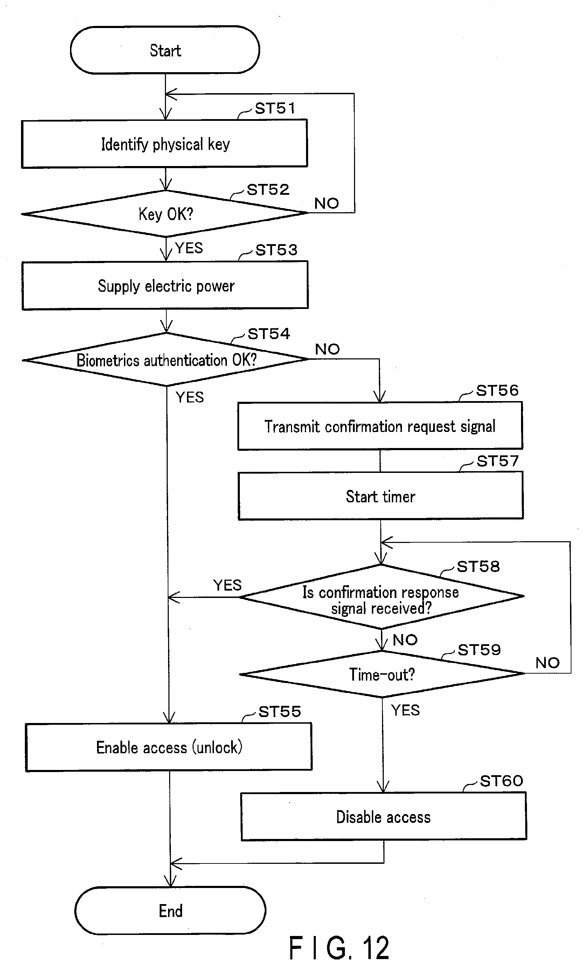

FIG. 12 is a flowchart for describing an operation example of the access control device 10B according to the second embodiment.

When the physical key K is inserted in the insertion unit 51a, the key identification unit 51 of the access control device 10B determines whether the inserted physical key K is the valid key (ST51). If the inserted physical key K is the valid key, the key identification unit 51 supplies to the processor 11 a signal indicating that the valid key is inserted in the insertion unit 51a.

In accordance with the signal from the key identification unit 51, the processor 11 detects that the valid key is inserted in the insertion unit 51a (ST52). If the signal indicating that the valid key is inserted is absent (ST52, NO), the processor 11 returns to ST51, and stands by to wait for the signal from the key identification unit 51. Note that if the processor 11 receives from the key identification unit 51 a signal indicating that a physical key, which is not the valid key, is inserted, the processor 11 may go to ST60 and may execute a process of disabling the access.

Upon receiving the signal indicating that the valid key is inserted in the insertion unit 51a, the processor 11 causes the power transmission interface 18 to supply electric power to the key device 20B (ST53). The processor 11 instructs the power transmission interface 18 to transmit power, and the power transmission interface 18 starts power supply to the key device 20B in accordance with the instruction from the processor 11. For example, the power transmission interface 18 outputs power that can be received by the power reception interface 28 of the key device 20B, through the physical key K inserted in the insertion unit 51a. In addition, the power transmission interface 18 may be configured to supply the power that can be received by the power reception interface 28 by non-contact power transmission.

The key device 20B receives, by the power reception interface 28, the power from the access control device 10B in which the physical key K is inserted in the insertion unit 51a. The key device 20B is activated by the power received by the power reception interface 28, and executes biometrics authentication. The key device 20B transmits, by the communication interface 25, the information including the biometrics authentication result to the access control device 10B.

The processor 11 of the access control device 10B communicates, via the first communication interface 16, with the key device 20B that is activated by the power transmitted from the power transmission interface 18. The processor 11 acquires, by the first communication interface 16, the result of the biometrics authentication in the key device 20B.

Upon receiving the result of the biometrics authentication from the key device 20B, the processor 11 determines whether the user of the key device 20B is authenticated as the registrant, based on the acquired result of the biometrics authentication (ST54). When the user is confirmed to be the registrant by the biometrics authentication, that is, when the biometrics authentication is successful (ST54, YES), the processor 11 permits the access by the key device 20B (ST55). For example, the processor 11 unlocks the electronic lock 19 by outputting a control signal that unlocks the electronic lock 19.

On the other hand, when the user is not confirmed to be the registrant by the biometrics authentication, that is, when the biometrics authentication failed (ST54, NO), the processor 11 specifies, with use of the second communication interface 17, the confirmation destination registered by being correlated with the inserted key by referring to the access management table 14a. If the confirmation destination is specified, the processor 11 transmits the confirmation response signal to the specified confirmation destination (ST56). When the processor 11 transmits the confirmation response signal, the processor 11 starts time measurement by the timer 15 (ST57).

After starting the time measurement by the timer 15, the processor 11 monitors whether a confirmation response signal from the confirmation device 30 is received by the second communication interface 17 (ST58). The confirmation response signal is a signal indicating that the permission of access to the access control device 10B is instructed in the confirmation device 30. If the processor 11 receives the confirmation response signal (ST58, YES), the processor 11 permits the access (ST55) and executes control to unlock the electronic lock 19.

When the confirmation response signal cannot be received (ST58, NO), the processor 11 checks whether a predetermined allowable time has passed, based on the time measured by the timer 15 (ST59). If the timing of reception of the confirmation response signal is within the allowable time (ST59, NO), the processor 11 stands by to wait for the reception of the confirmation response signal. If time-out of the allowable time is determined (ST59, YES), the processor 11 disables the access by the key device 20B (ST60). For example, when the access is disabled, the processor 11 rejects the unlocking of the electronic lock 19 with use of the key device 20B. In this case, the processor 11 may issue an alarm indicating that the access is disabled, or may display, by a display device, information indicating that the access is disabled.

According to the above-described authentication system relating to the second embodiment, the access control, such as unlocking of the electronic lock, is enabled in accordance with the confirmation of the key by the physical key included in the key device and the result of the biometrics authentication for the user in the key device. For example, when the key device is configured to function as an emergency key for a smart key, even if a problem or battery run-down occurs in the key holder functioning as the smart key main body, the key device functioning as the emergency key can confirm the user by biometrics authentication, and security can be ensured. In addition, even when false rejection occurs in the biometrics authentication, access control can be executed by two-element authentication by access confirmation in a preset confirmation device, and there can be provided an authentication system that has high practicality while suppressing a decrease in security level.

### (Third Embodiment)

Next, a third embodiment is described.

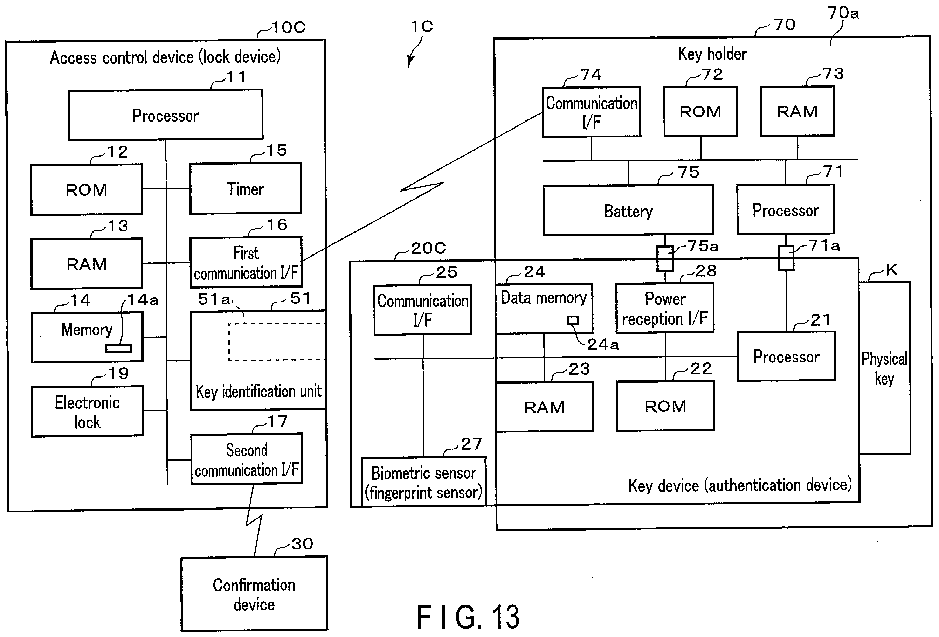

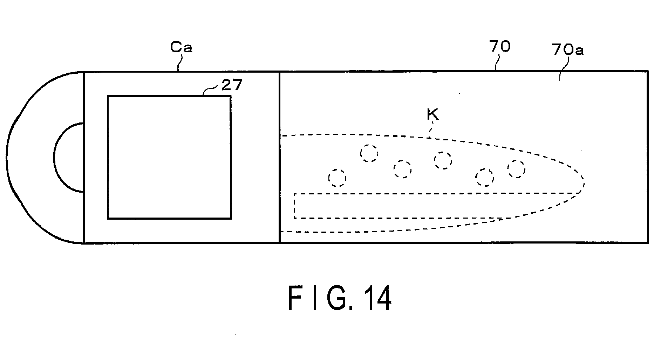

FIG. 13 is a block diagram illustrating a configuration example of each of devices in an authentication system 1C according to the third embodiment. The authentication system 1C according to the third embodiment illustrated in FIG. 13 includes an access control device (lock device) 10C, a key device 20C, a confirmation device 30 and a key holder 70. In addition, FIG. 14 is a view illustrating a configuration example of the key device 20C and key holder 70 according to the third embodiment.

The authentication system 1C according to the third embodiment differs from the authentication system 1B described in the second embodiment in that the key device 20C performs biometrics authentication in a state of being accommodated in the key holder 70. Note that, in the configuration example illustrated in FIG. 13 and FIG. 14, structural elements similar to those illustrated in FIG. 2, FIG. 7 or FIG. 18 are denoted by like reference signs at the same locations, and a detailed description thereof is omitted. Similarly, a detailed description of the advantageous effects derived from the configuration of the first or second embodiment is omitted here.

In the configuration example illustrated in FIG. 13, the access control device 10C includes a processor 11, a ROM 12, a RAM 13, a data memory 14, a timer 15, a first communication interface 16, a second communication interface 17, an electronic lock (security device) 19, and a key identification unit (key identifier) 51.

The access control device 10C illustrated in FIG. 13 is configured such that the power transmission interface 18 is omitted from the configuration of the access control device 10B of the second embodiment illustrated in FIG. 7. In addition, the access control device 10C differs from the second embodiment in that the first communication interface 16 communicates with a communication interface 74 of the key holder 70.

In the configuration example illustrated in FIG. 13, the key device 20C includes a processor 21, a ROM 22, a RAM 23, a data memory 24, a communication interface 25, a biometric sensor (fingerprint sensor) 27, a power reception interface 28, and a physical key K.

In the key device 20C, in the state of being accommodated in the key holder 70, the power reception interface 28 is connected in such a manner as to be capable of receiving electric power from a battery 75 provided in the key holder 70, and the processor 21 is connected in such a manner as to be capable of executing information communication with a processor 71 of the key holder 70.

Note that the physical key K includes unique information as a key, like the physical key K described in the second embodiment. It is assumed that the physical key K is configured such that the key identification unit 51 can determine whether the physical key K is the valid key.

In the configuration example illustrated in FIG. 13, the key holder 70 includes a housing 70a that accommodates at least a part of the key device 20C. The key holder 70 includes, in the housing 70a, a processor 71, a ROM 72, a RAM 73, a communication interface 74 and a battery 75. In addition, the processor 71 is connected, via a data bus or the like, to the ROM 22, RAM 23, communication interface 74 and others. In addition, the processor 71 is also connected via a contact portion 71a to the processor 21 of the key device 20C accommodated in the housing 70a. Besides, the battery 75 is connected in such a manner as to supply power to the respective components in the housing 70a. Furthermore, the battery 75 is connected in such a manner as to supply power to the power reception interface 28 of the key device 20C accommodated in the housing 70a via a contact portion 75a.

The processor 71 functions as a controller that controls the key holder 70. The processor 71 is, for example, a CPU. The processor 71 may be any processor that implements the control of each component and information processing by executing programs. Specifically, the processor 71 executes various processes, based on control programs and control data stored in the ROM 72 or the like. In addition, in the configuration example illustrated in FIG. 13, the processor 71 is connected in such a manner as to be communicable with the processor 21 of the key device 20C in the state in which the key device 20C is accommodated in the key holder 70. Note that some of various functions as described below, which are implemented by the processor 21 executing programs, may be implemented by hardware circuitry.

The ROM 72 is a nonvolatile memory that stores programs for control and control data in advance. The ROM 72 is assembled in the key device 20C in the state in which the ROM 72 stores control programs and control data at the stage of manufacture.

The RAM 73 is a volatile memory. The RAM 73 temporarily stores data or the like during the processing of the processor 71. For example, the RAM 73 functions as a buffer for calculation, a buffer for reception, and a buffer for transmission. As the buffer for calculation, the RAM 73 temporarily stores results or the like of various arithmetic processes executed by the processor 71. As the buffer for reception, the RAM 73 stores command data or the like received from the access control device 10C via the communication interface 74. As the buffer for transmission, the RAM 73 stores a message (response data) or the like, which is transmitted to the access control device 10C via the communication interface 74.

The communication interface 74 is an interface for communicating with the access control device 10C. Like the communication interface 25 illustrated in FIG. 2, the communication interface 74 establishes a communication connection to the first communication interface 16 of the access control device 10C, and executes data transmission and reception. The communication interface 74 may be an interface of a communication method corresponding to the first communication interface 16.

The battery 75 is used as a power source of the key holder 70 and the key device 20C. The battery 75 is a primary battery such as a dry-cell battery, or a secondary battery such as a rechargeable battery. In the configuration example illustrated in FIG. 13, it is assumed that the battery 75 is connected to the power reception interface 28 of the key device 20C in the state in which the key device 20C is accommodated.

In addition, in the configuration example illustrated in FIG. 14, the key device 20C includes a housing 70a in which a part of the physical key K or the like is accommodated in the key holder 70. The key device 20C has such a shape as to be detachably attached to the key holder 70. The key device 20C is configured to be capable of performing biometrics authentication on biological information acquired by the biometric sensor 27 in the state of being accommodated in the key holder 70. In addition, the key device 20C is accommodated in the key holder 70 in the state in which the biometric sensor 27 can acquire biological information, and is electrically connected to the key holder 70. As illustrated in FIG. 13, the key device 20C is connected in such a manner as to be capable of receiving electric power for operation from the battery 75 provided in the key holder 70, and to be capable of transmitting and receiving information to and from the processor 71 in the key holder 70.

Specifically, in the state of being accommodated in the key holder 70, the key device 20C can operate by receiving power from the key holder 70, and can execute biometrics authentication on the biological information acquired from the user. In addition, the key holder 70 includes the communication interface 74 that communicates with the access control device 10C. Thus, in the state of being accommodated in the key holder 70, the key device 20C is configured to be communicable with the access control device 10C via the key holder 70.

Next, an operation of the authentication system 1C according to the third embodiment is described.

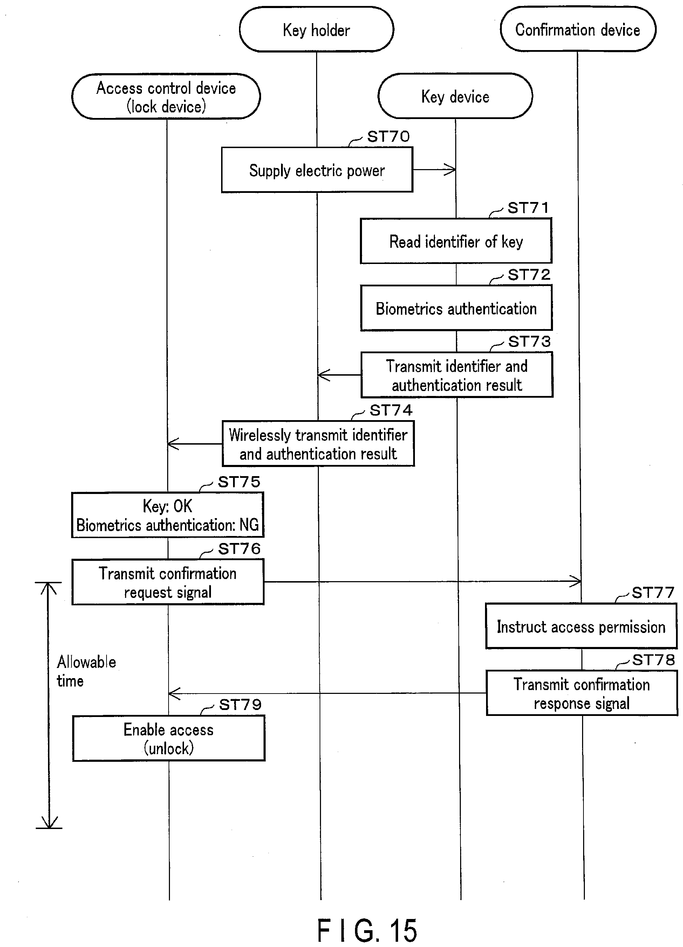

FIG. 15 is a sequence for describing an operation example of the authentication system 1C in a case where biometrics authentication in the key device 20C according to the third embodiment failed. FIG. 15 illustrates an operation example in a case where an access permission is instructed by the confirmation device 30 in response to a confirmation request signal after the failure of biometrics authentication. Note that, in the operation example illustrated in FIG. 15, since the operation after the transmission of the confirmation request signal is the same as the operation example illustrated in FIG. 4, a detailed description thereof is omitted.

As illustrated in FIG. 15, the key holder 70 supplies electric power for operation to the accommodated key device 20C (ST70). For example, in the state in which the key device 20C is accommodated in the key holder 70, the battery 75 of the key holder 70 is connected to the power reception interface of the key device 20C. The power reception interface 28 of the key device 20C obtains the power for operation from the battery 75 of the key holder 70, and supplies the power to the respective components in the key device 20C. Besides, the processor 71 of the key holder 70 may execute control to supply the power for operation from the battery 75 in accordance with an input to an operation key (not illustrated) or the like.

The processor 21 of the key device 20C is activated by the power supplied from the battery 75 of the key holder 70. The processor 21 of the activated key device 20C reads an identifier as identification information of the key device, which is stored in the data memory 24 (ST71). In addition, the processor 21 acquires the biological information of the user by the biometric sensor 27, and executes biometrics authentication on the acquired biological information (ST72). For example, the processor 21 executes the biometrics authentication by collating the fingerprint image of the user, which is acquired by the fingerprint sensor functioning as the biometric sensor 27, and the feature point information of the biological information (the feature of the biological information) included in the authentication data of the registrant stored in the data memory 24. In FIG. 15, it is assumed that the processor 21 could not authenticate that the user and the registrant are the identical person, and the biometrics authentication failed (the biometrics authentication is NG).

The processor 21 of the key device 20C notifies the key holder 70 of the identifier read from the data memory 24 and the biometrics authentication result (here, information indicative of the failure of the biometrics authentication) (ST73). Here, the processor 21 may notify the processor 71 of the key holder 70 of the identifier of the key device 20C and the biometrics authentication result relating to the user as data for transfer to the access control device 10C.

Upon receiving the identifier of the key device 20C and the biometrics authentication result relating to the user from the key device 20C, the processor 71 of the key holder 70 transmits the information including the received identifier and biometrics authentication result to the access control device 10C by the communication interface 74 (ST74).

The access control device 10C receives, by the first communication interface 16, the identifier and the biometrics authentication result from the key device 20C. Upon receiving the identifier of the key device 20C, the processor 11 of the access control device 10C determines whether the key device 20A is a valid key by referring to the access management table 14a. For example, the processor 11 determines whether to be the valid key, based on whether the received identifier of the key device 20A agrees with the identifier registered in the access management table 14a. In the example illustrated in FIG. 15, it is assumed that the processor 11 determines that the key device 20C indicated by the received identifier is the valid key.

In addition, when the key device 20C is the valid key, the processor 11 confirms the biometrics authentication result in the key device 20A. When the key device 20C is the valid key and the user of the key device 20C is the registrant (lawful user), that is, when the biometrics authentication is successful (OK), the processor 11 executes control to unlock the electronic lock 19 (to permit access).

On the other hand, when it is not confirmed by the biometrics authentication that the key device 20A is the valid key and the user of the key device 20A is the registrant (lawful user), that is, when the biometrics authentication failed (NG) (ST75), the processor 11 transmits a confirmation request signal to the confirmation destination corresponding to the identifier (ST76). For example, the processor 11 refers to the access management table 14a, and specifies the confirmation destination corresponding to the identifier. Upon specifying the confirmation destination (the transmission destination of the confirmation request signal), the processor 11 transmits the confirmation request signal to the specified confirmation destination via the second communication interface 17.

In addition, when transmitting the confirmation request signal, the processor 11 sets a period (allowable time) within which a confirmation response signal from the confirmation device 30 to the confirmation request signal is valid, and starts time monitoring by the timer 15. After starting the time monitoring, the processor 11 accepts, if within the set allowable time, the confirmation response signal from the confirmation device 30.

When the confirmation device 30 receives the confirmation request signal from the access control device 10C, the confirmation device 30 accepts a user's instruction to unlock the electronic lock 19 of the access control device 10C. For example, upon receiving the confirmation request signal, the confirmation device 30 displays, on a display unit (not illustrated), a confirmation screen as to whether or not to unlock the electronic lock of the access control device 10A.

Here, in the confirmation device 30, it is assumed that the user instructed unlocking of the electronic lock by using an operation unit (not illustrated). Upon accepting the user's instruction to unlock the electronic lock (ST77), the the confirmation device 30 transmits to the access control device 10C the confirmation response signal to request unlocking of the electronic lock 19 (ST78).

After transmitting the confirmation request signal, the processor 11 of the access control device 10C accepts the confirmation response signal within the allowable time. If the processor 11 receives the confirmation response signal from the confirmation device 30 within the allowable time, the processor 11 executes control to unlock the electronic lock 19 as a process of permitting access (ST79). For example, the processor 11 supplies to the electronic lock 19 a control signal that unlocks the lock, and the electronic lock 19 unlocks the lock in accordance with the control signal from the processor 11.

In addition, if the confirmation response signal is not received within the allowable time from the transmission of the confirmation request signal, the processor 11 of the access control device 10C disables the access and does not unlock the electronic lock 19.

As described above, the access control device 10C according to the third embodiment can be implemented by a similar operation to the operation in the first embodiment as illustrated in the flowchart of FIG. 6, except for the operation in which the access control device 10C supplies no power to the key device 20C and receives the identifier and biometrics authentication result via the key holder 70. Thus, a detailed description of the operation example of the access control device 10C according to the third embodiment is omitted.

Note that the authentication system may be configured such that the confirmation device 30 incudes a biometric sensor. In this case, upon receiving a confirmation response signal indicative of access permission, the confirmation device 30 may execute biometrics authentication on the user by using the biometric sensor, and may permit access to the security device in accordance with the authentication result.

According to the above authentication system relating to the third embodiment, in the state in which the key device is accommodated in the key holder, the key device can execute biometrics authentication by the electric power from the key holder, and can present the identifier of the key and the biometrics authentication result to the access control device via the key holder.

Thereby, even in the case of a key device without a power source, such as a battery, or a communication function, the key device may be attached to the key holder, thus enabling access control of unlocking of an electronic lock, or the like, in accordance with the confirmation of the key and the biometrics authentication result relating to the user. Moreover, even when false rejection occurs in the biometrics authentication, access control can be executed by two-element authentication by access confirmation in a preset confirmation device, and there can be provided an authentication system that has high practicality while suppressing a decrease in security level.

### (Fourth Embodiment)

Next, a fourth embodiment is described.

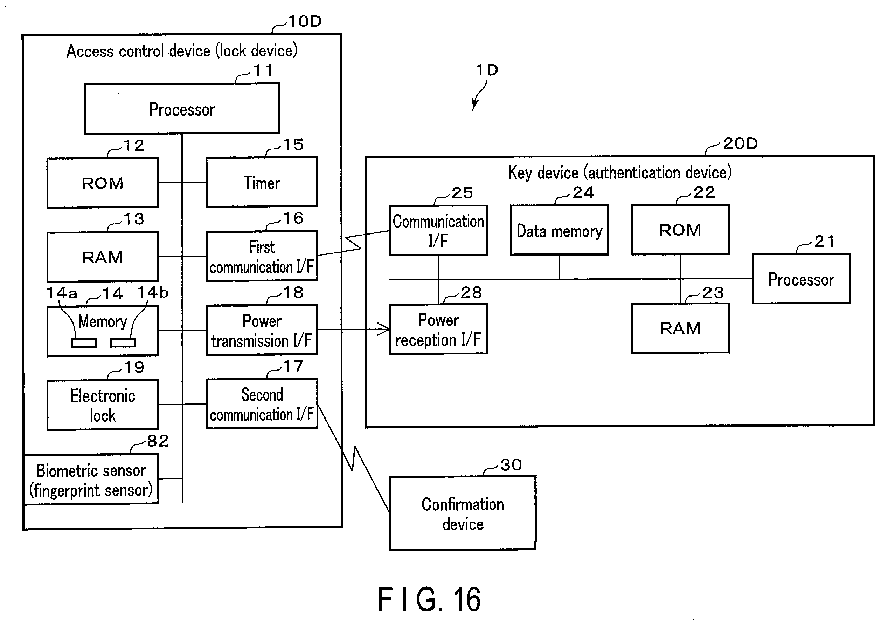

FIG. 16 is a block diagram illustrating a configuration example of each of devices in an authentication system 1D according to the fourth embodiment.

The authentication system 1D according to the fourth embodiment illustrated in FIG. 16 includes an access control device (lock device) 10D, a key device 20D, and a confirmation device 30. The configuration of the access control device 10D differs from the first embodiment in that the access control device 10D includes a biometric sensor 82 in addition to the configuration of the access control device 10A illustrated in FIG. 2. Furthermore, the configuration of the key device 20D differs from the first embodiment in that the biometric sensor 27 of the access control device 10A described in the first embodiment and illustrated in FIG. 2 is omitted.

Note that, in the configuration example illustrated in FIG. 16, structural elements similar to those illustrated in FIG. 2 are denoted by like reference signs at the same locations, and a detailed description thereof is omitted. Similarly, a detailed description of the advantageous effects derived from the configuration of the first embodiment is omitted here.

In the configuration example illustrated in FIG. 16, the access control device 10D includes a processor 11, a ROM 12, a RAM 13, a data memory 14, a timer 15, a first communication interface 16, a second communication interface 17, an electronic lock (security device) 19, and a biometric sensor 82.

The access control device 10D illustrated in FIG. 16 is configured to include the biometric sensor 82 in addition to the configuration of the access control device 10A of the first embodiment illustrated in FIG. 2. In the access control device 10D, the processor 11 includes a function of executing biometrics authentication on biological information acquired by the biometric sensor 82. The biometric sensor 82 can be implemented by, for example, a biometric sensor similar to the biometric sensor 27 included in the key device 20A described in the first embodiment and illustrated in FIG. 2.

However, the biometric sensor 82 is not limited to a biometric sensor that acquires fingerprint information as biological information. The biometric sensor 82 may be any biometric sensor that acquires biological information corresponding to biometrics authentication that can be executed in the access control device 10D. For example, the biometric sensor 82 may be configured to acquire face information as biological information.

In addition, in the access control device 10D, in order to execute biometrics authentication with use of the biometric sensor 82, an authentication DB 14b that stores authentication data of a registrant (dictionary data of biological information) is provided in the data memory 14. Like the authentication DB 24a described in the first embodiment illustrated in FIG. 2, the authentication DB 14b stores, as authentication data of the registrant, features such as feature point information of the biological information of the registrant. Besides, the authentication DB 14b may be configured to store authentication data of a plurality of registrants. The authentication DB 14b stores authentication data including feature point information of biological information of a registrant (access right owner) corresponding to the key indicated by the key identification information, by correlating the authentication data with the key identification information of the key device 20C. It should be noted, however, that the authentication DB 14b is secured in a secure memory area in the data memory 14.

Besides, in the configuration example illustrated in FIG. 16, the key device 20D includes a processor 21, a ROM 22, a RAM 23, a data memory 24, a communication interface 25, and a power reception interface 28. The key device 20D can be implemented by omitting the biometric sensor 27 in the key device 20A described in the first embodiment and illustrated in FIG. 2.

Next, an operation of the authentication system 1D according to the fourth embodiment is described.

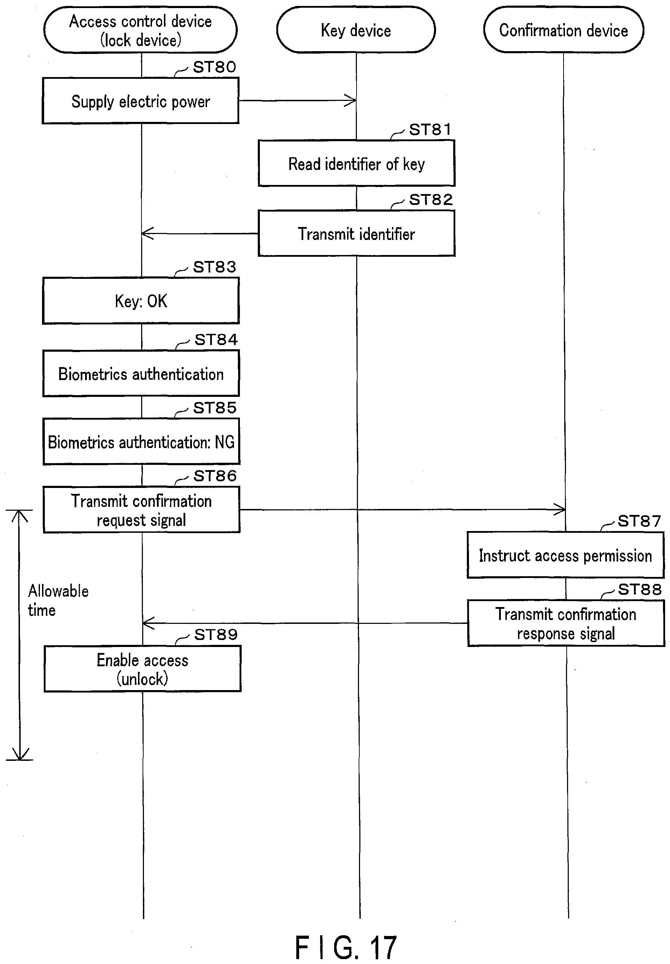

FIG. 17 is a sequence for describing an operation example of the authentication system 1D in a case where biometrics authentication in the key device 20D according to the fourth embodiment failed. FIG. 17 illustrates an operation example in a case where an access permission is instructed by the confirmation device 30 in response to a confirmation request signal after the failure of biometrics authentication. Note that, in the operation example illustrated in FIG. 17, since the operation after the transmission of the confirmation request signal is the same as the operation example illustrated in FIG. 4, a detailed description thereof is omitted.

As illustrated in FIG. 17, the access control device 10D supplies electric power for operation to the key device 20D (ST80). For example, the access control device 10D supplies, from the power transmission interface 18, electric power that can be received by the power reception interface 28 of the key device 20D.

The key device 20D is activated by the power supplied from the access control device 10D. The processor 21 of the activated key device 20D establishes a communication state with the access control device 10D by the communication interface 25. Upon the establishment of the communication state with the access control device 10A, the processor 21 reads an identifier as key identification information of the key device, which is stored in the data memory 24 (ST81). Upon reading the identifier, the processor 21 of the key device 20D transmits the identifier read from the data memory 24 to the access control device 10D by the communication interface 25 (ST82).

The access control device 10D receives, by the first communication interface 16, the identifier from the key device 20D. Upon receiving the identifier of the key device 20D, the processor 11 of the access control device 10A determines whether the key device 20A is a valid key by referring to the access management table 14a (ST83). The processor 11 determines whether to be the valid key, based on whether the received identifier of the key device 20A agrees with the identifier registered in the access management table 14a. In the example illustrated in FIG. 4, it is assumed that the processor 11 determines that the key device 20A is the valid key.

In addition, when the key device 20D is the valid key, the processor 11 acquires the biological information of the user by the biometric sensor 82, and executes biometrics authentication on the acquired biological information of the user (ST84). For example, the processor 11 specifies the authentication data of the registrant corresponding to the identifier stored in the authentication DB 14b of the data memory 24. Upon specifying the authentication data of the registrant, the processor 11 executes the biometrics authentication by collating the biological information of the user, which is acquired by the biometric sensor 27, and the feature point information of the biological information included in the authentication data of the registrant. When the biometrics authentication is successful, that is, when the key device 20A is the valid key and the user of the key device 20A is the registrant (lawful user), the processor 11 executes control to unlock the electronic lock 19 (to permit access).

Note that the biometrics authentication executed by the processor 11 is an authentication process corresponding to biological information acquired by the biometric sensor 82. For example, when the biometric sensor 82 is a fingerprint sensor, the processor 11 executes biometrics authentication by a fingerprint. Besides, when the biometric sensor 82 is a sensor such as a camera that acquires a face image, the processor 11 executes biometrics authentication by a face image.

Here, it is assumed that the processor 11 could not authenticate that the user and the registrant corresponding to the identifier are the identical person, and the biometrics authentication failed (the biometrics authentication is NG) (ST85). When the biometrics authentication failed, that is, when it could not be confirmed by the biometrics authentication that the key device 20A is the valid key and the user of the key device 20A is the registrant (lawful user), the processor 11 transmits a confirmation request signal to the confirmation destination corresponding to the identifier (ST86). The processor 11 refers to the access management table 14a, specifies the confirmation destination corresponding to the identifier, and transmits the confirmation request signal to the specified confirmation destination by the second communication interface 17.

In addition, when transmitting the confirmation request signal, the processor 11 sets a period (allowable time) within which a confirmation response signal from the confirmation device 30 to the confirmation request signal is valid, and starts time monitoring by the timer. After starting the time monitoring, the processor 11 accepts, if within the set allowable time, the confirmation response signal from the confirmation device 30.

When the confirmation device 30 receives the confirmation request signal from the access control device 10D, the confirmation device 30 accepts a user's instruction to unlock the electronic lock 19 of the access control device 10D. If the unlock instruction (instruction of access permission) of the electronic lock is input by the user (ST87), the confirmation device 30 transmits to the access control device 10D the confirmation response signal to request unlocking of the electronic lock 19 (ST88).

After transmitting the confirmation request signal, the processor 11 of the access control device 10D accepts the confirmation response signal within the allowable time. If the processor 11 receives the confirmation response signal from the confirmation device 30 within the allowable time, the processor 11 executes control to unlock the electronic lock 19 as a process of permitting access (ST89). For example, the processor 11 supplies to the electronic lock 19 a control signal that unlocks the lock, and the electronic lock 19 unlocks the lock in accordance with the control signal from the processor 11.

Besides, if the confirmation response signal is not received within the allowable time from the transmission of the confirmation request signal, the processor 11 of the access control device 10D disables the access and does not unlock the electronic lock 19. In this case, the processor 11 of the access control device 10A may issue a notification or the like to the effect that the access is disabled, by an alarm or the like, or may issue the notification to the confirmation device 30.

Next, an operation of the access control device 10D according to the fourth embodiment is described.

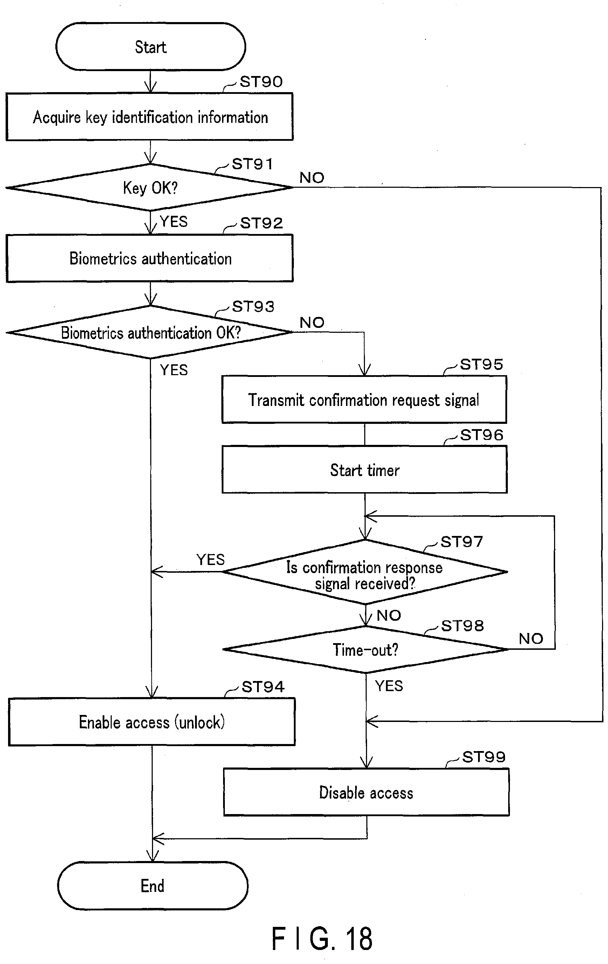

FIG. 18 is a flowchart for describing an operation example of the access control device 10D according to the fourth embodiment.

To start with, the processor 11 of the access control device 10D supplies power for operation to the key device 20A by the power transmission interface 18. The processor 11 communicates, via the first communication interface 16, with the key device 20D that is activated by the power transmitted from the power transmission interface 18. The processor 11 acquires the identifier of the key device 20D by the first communication interface 16 (ST90).

Upon receiving the identifier of the key device 20D by the first communication interface 16, the processor 11 determines whether the key device 20D is the valid key, based on whether the received identifier agrees with the identifier registered in the access management table 14a (ST91).

If the processor 11 determines that the key device 20D is not the valid key (ST91, NO), the processor 11 disables the access by the key device 20D (ST99). For example, when the access is disabled, the processor 11 rejects the unlocking of the electronic lock 19 with use of the key device 20D. In this case, the processor 11 may issue an alarm indicating that the access is disabled, or may display, by a display device, information indicating that the access is disabled.

When the processor 11 determines that the key device 20D is the valid key (ST91, YES), the processor 11 executes biometrics authentication (ST92). The processor 11 verifies the biological information of the user, which is acquired by the biometric sensor 82, and the feature point information of the biological information included in the authentication data of the registrant correlated with the key device 20D. The processor 11 determines whether the user is the registrant, based on the similarity degree between the biological information of the user and the feature point information of the biological information of the registrant, and sets the determination result as the biometrics authentication result.

If the biometrics authentication is completed, the processor 11 determines whether the user is authenticated as the registrant correlated with the key device, based on the result of the biometrics authentication (ST93). When the user is confirmed to be the registrant by the biometrics authentication, that is, when the biometrics authentication is successful (ST93, YES), the processor 11 permits the access by the key device 20D (ST94). For example, the processor 11 unlocks the electronic lock 19 by outputting a control signal that unlocks the electronic lock 19.

On the other hand, when the user is not confirmed to be the registrant by the biometrics authentication, that is, when the biometrics authentication failed (ST93, NO), the processor 11 specifies the confirmation destination correlated with the identifier in the access management table 14a, and transmits, by using the second communication interface 17, a confirmation response signal to the specified confirmation destination (ST95). When the processor 11 transmits the confirmation response signal, the processor 11 starts time measurement by the timer 15 (ST96).

After starting the time measurement by the timer 15, the processor 11 monitors whether a confirmation response signal from the confirmation device 30 is received by the second communication interface 17 (ST97). The confirmation response signal is a signal indicating that the permission of access to the access control device 10A is instructed in the confirmation device 30. If the processor 11 receives the confirmation response signal within a predetermined allowable time (ST97, YES), the processor 11 permits the access (ST94) and executes control to unlock the electronic lock 19.

When the confirmation response signal cannot be received (ST97, NO), the processor 11 checks whether the predetermined allowable time has passed, based on the time measured by the timer 15 (ST98). If the time measured by the timer 15 is within the allowable time (ST98, NO), the processor 11 stands by once again for the reception of the confirmation response signal. If the time measured by the timer 15 exceeds the allowable time (ST98, YES), the processor 11 disables the access by the key device 20D (ST94).

As described above, the access control device according to the fourth embodiment executes biometrics authentication if the identifier acquired from the key device is the identifier of the valid key (key device). If the biometrics authentication between the user and the registrant of the key is successful, the access control device permits access, and if the biometrics authentication failed, the access control device inquires of the confirmation destination (confirmation device) correlated with the key as to whether the access is enabled or not. The access control device permits the access if the access control device successfully receives the signal instructing the permission of the access from the confirmation destination within the predetermined allowable time.

Thereby, even if the biometrics authentication is not executed in the key device, the access control by the identifier of the key and the result of the biometrics authentication can be executed. Moreover, even when the biometrics authentication failed, the access, such as the unlocking of the electronic lock, can be permitted by the access confirmation in the confirmation destination registered in advance. Specifically, even when there occurs false rejection by the biometrics authentication in the access control device, access control can be executed by two-element authentication by access confirmation in the preset confirmation device, and there can be provided an authentication system that can have high practicality while suppressing a decrease in security level.

While certain embodiments of the present invention have been described, these embodiments have been presented by way of example only, and are not intended to limit the scope of the invention. These novel embodiments may be implemented in a variety of other forms, and various omissions, substitutions and changes may be made without departing from the spirit of the inventions. These embodiments and modifications thereof are included in the scope and spirit of the invention, and included in the scope of the inventions of the accompanying claims and their equivalents.

## Claims

1. An access control device comprising:
a first communication interface configured to communicate with a key device including key identification information;
a second communication interface configured to communicate with a confirmation device that is registered in advance; and
a processor configured to:
acquire, from the key device communicating by the first communication interface, an identifier functioning as the key identification information and a biometrics authentication result in which whether a user of the key device is an access right owner of a security device is confirmed by biological information;
transmit a confirmation request signal requesting confirmation of an access permission to the confirmation device correlated with the key device by using the second communication interface, when the key identification information of the key device agrees with key identification information of a valid key and when the biometrics authentication result is an authentication failure; and
permit access to the security device, upon receiving a confirmation response signal indicative of the access permission from the confirmation device in response to the confirmation request signal.

2. The access control device of Claim 1, wherein the processor is configured to permit the access to the security device, upon receiving the confirmation response signal indicative of the access permission from the confirmation device within a predetermined time from when the confirmation request signal is transmitted.

3. The access control device of Claim 1 or 2, further comprising:
an insertion unit in which a physical key provided in the key device is inserted; and
a key identifier configured to output a signal indicative of the valid key, if key identification information formed on the physical key inserted in the insertion unit agrees with predetermined key identification information,
wherein when the processor acquires the signal indicative of the valid key from the key identifier, the processor acquires the biometrics authentication result from the key device by the first communication interface.

4. The access control device of any one of Claims 1 to 3, further comprising a power transmission interface configured to supply electric power to the key device.

5. The access control device of Claim 3, further comprising a power transmission interface configured to supply electric power to the key device through the physical key inserted in the insertion unit.

6. The access control device of any one of Claims 1 to 5, wherein the first communication interface is a wireless communication device configured to wirelessly communicate with the key device.

7. The access control device of Claim 6, wherein the wireless communication device functioning as the first communication interface is a short-range wireless communication interface configured to execute short-range wireless communication with the key device.

8. The access control device of Claim 4, wherein the first communication interface and the power transmission interface are a non-contact communication interface configured to supply electric power to the key device in a non-contact manner and to execute non-contact communication.

9. The access control device of any one of Claims 1 to 8, further comprising a memory that stores key identification information of a plurality of key devices that are valid keys.

10. An access control device comprising:
a first communication interface configured to communicate with a key device including key identification information;
a second communication interface configured to communicate with a confirmation device that is registered in advance;
a biometric sensor configured to acquire biological information of a user when the key identification information of the key device communicating by the first communication interface agrees with key identification information of a valid key; and
a processor configured to:
execute biometrics authentication that authenticates, by the biological information, whether the user is an access right owner of a security device;
transmit a confirmation request signal requesting confirmation of an access permission to the confirmation device correlated with the key device by using the second communication interface, when the biometrics authentication fails; and
permit access to the security device, upon receiving a confirmation response signal indicative of the access permission from the confirmation device within a predetermined time from when the confirmation request signal is transmitted.

11. A key device comprising:
a communication interface configured to communicate with an access control device that executes access control of a security device;
a power reception interface configured to receive electric power for operation;
a biometric sensor configured to acquire biological information of a user; and
a processor configured to execute biometrics authentication as to whether the user is an access right owner of the security device, by using the biological information acquired by the biometric sensor, and configured to transmit a result of the biometrics authentication to the access control device by the communication interface.

12. The key device of Claim 11, further comprising a memory that stores an identifier functioning as key identification information that specifies the key device,
wherein the processor causes the communication interface to transmit to the access control device a result of the biometrics authentication together with the key identification information stored in the memory.

13. The key device of Claim 11, further comprising a physical key on which key identification information that specifies the key device is formed,
wherein the processor causes the communication interface to transmit a result of the biometrics authentication to the access control device in a state in which the physical key is set in the access control device.

14. A key holder comprising:
a housing accommodating a key device;
a communication interface configured to communicate with an access control device that executes access control of a security device;
a battery that supplies electric power to the key device; and
a processor configured to cause the communication interface to transmit, to the access control device, key identification information of the key device and a result of biometrics authentication that authenticates, by the key device, whether a user is an access right owner of the security device.

15. The key holder of Claim 14, further comprising a biometric sensor configured to acquire biological information of the user,
wherein the processor causes the communication interface to transmit, to the access control device, the key identification information of the key device and the result of the biometrics authentication that authenticates whether the user is the access right owner of the security device, by using the biological information of the user acquired by the biometric sensor.
